Europäisches Patentamt

(19) European Patent Office

Office européen des brevets

(11) Publication number: **0 111 426**
**B1**

(12) **EUROPEAN PATENT SPECIFICATION**

(45) Date of publication of patent specification: **15.10.86**

(51) Int. Cl.⁴: **B 60 J 3/00**

(21) Application number: **83307569.0**

(22) Date of filing: **13.12.83**

(54) **A light for a vehicle visor.**

(30) Priority: **13.12.82 US 448940**

(43) Date of publication of application:
**20.06.84 Bulletin 84/25**

(45) Publication of the grant of the patent:
**15.10.86 Bulletin 86/42**

(84) Designated Contracting States:
**DE FR GB IT**

(56) References cited:
**EP-A-0 096 154**
**FR-A-2 318 046**
**US-A-2 466 454**
**US-A-3 375 364**
**US-A-4 421 355**

(73) Proprietor: **PRINCE CORPORATION**
**Windcrest Drive**
**Holland Michigan 49423 (US)**

(72) Inventor: **Marcus, Konrad Hugh**
**1162 Waukazoo Drive**
**Holland Michigan 49423 (US)**
Inventor: **Cody, Michael James**
**15663 Ryan Drive**
**Holland Michigan 49423 (US)**

(74) Representative: **Robinson, Anthony John**
**Metcalf et al**
**Kilburn & Strode 30 John Street**
**London, WC1N 2DD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## · Description

The present invention relates to a light for a vehicle visor and also to a vehicle visor comprising such a light.

Visors with illuminated vanity mirrors have become very popular standard and optional items for vehicles. The lights provided on such visors can be employed either in connection with a makeup mirror for personal care or when the visor is oriented in a lowered and forwardly extending direction, as lighting for use in reading maps or other material in low ambient light conditions. One such visor construction is described in US—A—3375364.

According to a first aspect of the present invention a light for a vehicle visor comprises a light assembly characterised by means for pivotally mounting the light assembly to a visor body for movement about a first axis between a stored position within a recess in the visor to a use position pivoted outwardly from the visor body, the recess extending through the visor body to permit the light assembly to be pivoted outwardly to either side of the visor body.

According to a second aspect of the present invention a light for a vehicle visor comprises a light assembly characterised by means for pivotally mounting the light assembly to a visor body for movement about a first axis between a stored position within a recess in the visor to a use position pivoted outwardly from the visor body, and a coupling between the light assembly and the means for pivotally mounting the light assembly to permit movement of the light assembly about a second axis generally orthogonal to the first axis.

Such a light when fitted to a visor can be directed for use either in illuminating the face of the user when a mirror is mounted to the visor body or directed to locations within the interior of the body of the vehicle for use as a map reading lamp or for other functions. When not in use the light can be stored so that it is substantially flush with the visor body and in use projects from the visor body and can be directed to provide selective illumination to the interior of a vehicle.

In a preferred embodiment the light assembly comprises a light housing and the coupling comprises a pivot connection between the light assembly and the means for pivotally mounting the light assembly to the visor body.

Preferably the light assembly comprises a light housing having a lens mounted in one end and a lamp positioned within the housing for directing illumination through the lens. The light housing may be relatively flat and has a curved end remote from the one end and sidewalls terminating in spaced relationship at the remote end to define end stops. The coupling may include a relatively flat housing having curved slots extending therein and terminating in end walls which engage the end stops of the light housing. Conveniently the pivot connection comprises a pivot pin mounted within the light housing and a pin receiving collar mounted to the housing and concentric with the curved slots. The light may include a pivot shaft extending from the housing in a direction generally orthogonal to the axis of the collar and near an end remote from the light housing.

The invention may be carried into practice in various ways but one lighting means for a vehicle visor embodying the invention will be described by way of example with reference to the accompanying drawings, in which:

Figure 1 is a perspective view of a vehicle visor incorporating a lighting means; and

Figure 2 is an enlarged, exploded view of the lighting means shown in Figure 1.

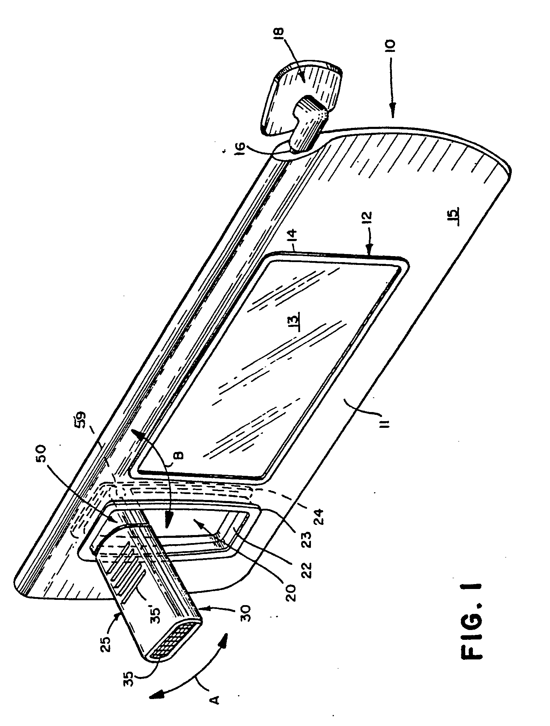

Referring initially to Figure 1, there is shown a visor 10 which has a body 11 which can be made of a moulded polymeric material of the type described in US—A—3,926,470. The visor body 11 includes a central rectangular recess for receiving a mirror and frame assembly 12 including a mirror 13 and frame 14 surrounding the mirror and conventionally mounted within the visor body 11 on a side facing the vehicle occupant when the visor is in a lowered position, as shown in Figure 1. The visor assembly also includes a pivot arm 16 mounted to an elbow mounting assembly 18 which can be of conventional construction to permit visor movement. The visor 10 can be upholstered in a fabric 15 to match the vehicle interior and includes a rectangular recess 20 extending through the visor body and incorporating a light.

The recess 20 is a generally vertically extending, elongated, rectangular aperture surrounded by a moulded polymeric frame 22 having a forward facing flange 23 and a rearward facing flange 24 defining a frame into which a pivoted light 30 which can be directed into a number of positions is mounted. The lighting includes a light housing assembly 25 which is pivotally coupled to a mounting bracket assembly 50. The light housing assembly 25 pivots laterally (i.e. from -side-to-side) with respect to the vehicle interior, as illustrated by arrow A in Figure 1, while the mounting bracket is pivotally coupled within the recess 20 to swing the entire light 30 from back to front through the recess 20 to either side of the visor, as illustrated by arrow B in Figure 1.

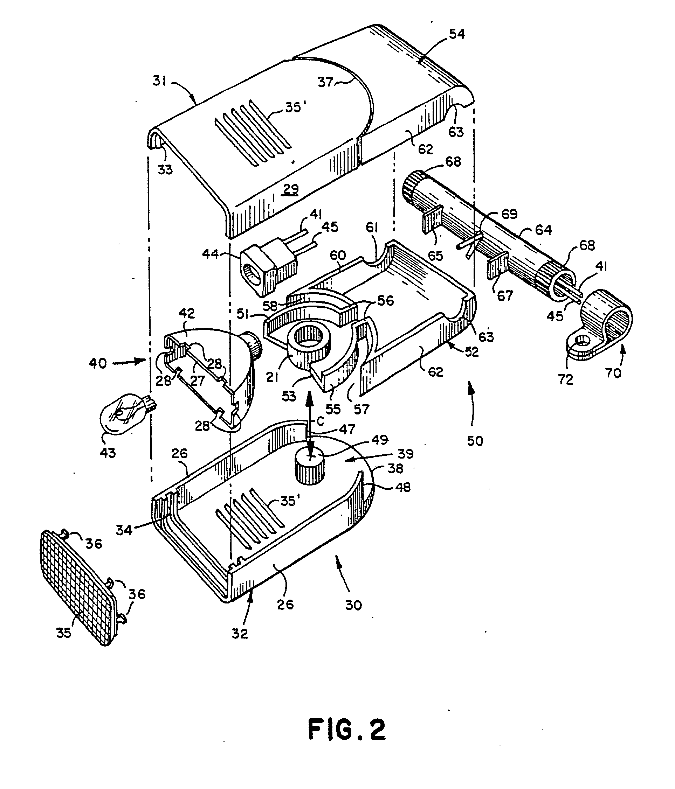

Referring now to Figure 2, the light housing assembly 25 includes an upper housing shell 31 and a lower housing shell 32 each of which are of substantially identical construction and include a U-shaped facing slot 33 and 34 near one end, respectively, for captively receiving and holding a peripheral flange 27 of a light reflector 42. The reflector 42 is generally concave with a reflective interior coating to direct light from a lamp 43 outwardly through a lens 35. The lens 35 extends along the width of the rectangular first end of the light housing assembly 25 and includes rearwardly projecting locking tabs 36 extending over the ridges defining the recesses 33 and 34. Clearance for the tabs 36 is provided by slots 28 formed in the peripheral flange 27 of the reflector 42. The opposite end of each housing half 31 and 32 is curved with a semi-circular end 37 and 38, respectively. Mating sidewalls 26 and 29 join and enclose the housing halves when assembled.

A light assembly 40 is mounted within the housing shells 31 and 32 and includes the light reflector 42, into which a socket 44 is mounted for receiving the lamp 43 mounted within the reflector and into the socket 44. The socket 44 is electrically coupled to the vehicle's electrical system by means of conductors 41 and 45, as described below. The mating sidewalls 26 and 29 of the shells 31 and 32 have curved rearward edges each terminating in an open, arcuate slot 39 extending over approximately a 90° angle. Edges 47 and 48 extend adjacent the boundary of the sidewalls 26 and 29 to provide a stop against the lateral movement of the light assembly 40 as described below. A pivot pin 49 is integrally formed with and extends upwardly from the housing shell 32 through a circular collar 21 integrally formed in a lower mounting housing 52 whcih is mated with a corresponding and substantially identical upper mounting housing 54 to form a mounting bracket assembly 50. The lower mounting housing 52 includes a generally semicircular, annular floor 53 bounded by arcuate wall sections 51 and 55 terminating in vertical end walls 56 against which the edges 47 and 48 engage at the adjustable limits of the light 30. This construction provides a pair of opposing, arcuate slots 57 and 58 into which the curved ends of sidewalls 26 and 29 can extend and travel during adjustment of the light 30 with respect to the mounting bracket assembly 50.

The collar 21 is supported centrally within the floor 53 to receive the pivot pin 49 extending upwardly from the lower housing shell 32 (a similar pivot structure is provided by housings 31 and 54) and which is snuggly fitted within the internal diameter of the collar 21 to be pivoted therein about the pivot axis C, shown in Figure 2, and remain in an adjusted pivoted position. The mounting housing halves 52 and 54 include a rearward portion of generally the same configuration with sidewalls 60 and 62 which mate and which each have semicircular recesses 61 and 63, respectively, which partially circumscribe a pivot shaft 64. The mounting bracket assembly 50 including the mounting housings 52 and 54 is held in alignment with respect to the pivot shaft 64 by means of integrally moulded stops 65 and 67 formed on the shaft 64 and fitted immediately inside and adjacent sidwalls 60 and 62 and the floors of the housing halves. The shaft 64 is knurled at opposite ends 68 to fit within a pair of friction socket brackets 70 (one shown) which are secured by fastening screws which extend through aperture 72 of each bracket 70 and into the visor body. The frame 22 surrounds the recess 20 and includes apertures 59 permitting the shaft 64 (Figure 1) to extend therethrough. Thus, the pivoting movement between the light assembly and the visor body occurs at the interface of the shaft ends 68 within the fixed brackets 70. The inner surface of the bracket 70 can also include one or more indentations which cooperate with the ends 68 of the shaft 64 to provide selected detent positions of adjustment of the light assembly about an arc of about 180° of movement. The bracket and pivot shaft may be formed to provide a holding detent for the stored position of the assembly flush with the visor body.

The conductors 41 and 45 extend through an aperture 69 formed in the wall of the hollow, cylindrical pivot shaft 64 and extend outwardly through one end, as best seen in Figure 2, to communicate with an on/off switch such that the lamp 43 can be selectively actuated for providing illumination from the light 30.

Each of the housing shells 31 and 32 may include venting louvers 35' to dissipate heat generated by the lamp 43. The housing shells 31 and 32 can be assembled by a suitable bonding adhesive along the mating edges of the sidewalls 26 and 29, or by suitable fastening screws. The mounting housing sections 52 and 54 can be similarly assembled. Thus, regardless of the position of the visor, the light 30 can be moved from a stored position substantially flush and parallel with the visor body to an outwardly extending position. This extended position can be on either side of the visor body. Figure 1 shows the light extended on one side of the visor. Alternatively the light can be extended on the opposite side of the visor (when the visor is in a stored position against the vehicle headliner) and pivoted to direct light away from the visor. The light also can be provided on the pivot pin 49 over approximately a 90° angle, as indicated by arrow A in Figure 1, to laterally adjust the direction of light emitted through the lens 35. The conductors 41 and 45 can extend to a switch conveniently located in the vehicle or on the visor or light housing for operation of the light. If desired, a dual intensity light can be provided by providing a series resistor and a three position switch which switches the resistor in and out of the circuit. Each of the housings can be moulded of a suitable polymeric material such as polycarbonate and either snap-fitted or fastened together or bonded by a suitable bonding adhesive. The visor may include a covered or uncovered mirror, as shown.

## Claims

1. A light (30) for a vehicle visor (10) comprising a light assembly (40) characterised by means (50) for pivotally mounting the light assembly to a visor body (11) for movement about a first axis (B) between a stored position within a recess (20) in the visor to a use position pivoted outwardly from the visor body, the recess (20) extending through the visor body (11) to permit the light assembly to be pivoted outwardly to either side of the visor body.

2. A light (30) for a vehicle visor (10) comprising a light assembly (40) characterised by means (50) for pivotally mounting the light assembly to a visor body (11) for movement about a first axis between a stored position within a recess (20) in the visor to a use position pivoted outwardly from the visor body, and a coupling between the light assembly (40) and the means (50) for pivotally mounting the light assembly to permit movement of the light assembly about a second axis (C) generally orthogonal to the first axis.

3. A light as claimed in Claim 2 in which the coupling comprises a pivot connection between the light assembly and the means for pivotally mounting the light assembly to the visor body.

4. A light as claimed in any one of the preceding claims in which the light assembly comprises a light housing (25) having a lens (35) mounted in one end and a lamp (43) positioned within the housing for directing illumination through the lens.

5. A light as claimed in Claim 4 in which the light housing is relatively flat and has a curved end (37, 38) remote from the one end and sidewalls (26, 29) terminating in spaced relationships at the remote end to define end stops (47, 48).

6. A light as claimed in Claim 5 in which the coupling includes a relatively flat housing (52, 54) having curved slots (57, 58) extending therein and terminating in end walls (56) which engage the end stops (47, 48) of the light housing (25).

7. A light as claimed in Claim 6 in which the pivot connection comprises a pivot pin (49) mounted within the light housing and a pin receiving collar (21) mounted to the housing (52, 54) and concentric with the curved slots.

8. A light as claimed in Claim 7 including a pivot shaft (64) extending from the housing (52, 54) in a direction general orthogonal to the axis of the collar and near an end remote from the light housing.

## Patentansprüche

1. Lichtquelle (30) für eine Fahrzeug-Sonnenblende (10) mit einer Lichtquellenanordnung (40), gekennzeichnet durch eine Einrichtung (50) zur schwenkbaren Befestigung der Lichtquellenanordnung am Körper (11) der Sonnenblende zwecks Bewegung um eine erste Achse (B) zwischen einer Speicher-Stellung innerhalb einer Ausnehmung (20) in der Blende in eine Benutzungsstellung, in welcher die Lichtquelle aus dem Sonnenblenden-Körper herausgeschwenkt ist, wobei sich die Ausnehmung (20) durch den Sonnenblenden-Körper (11) erstreckt, damit die Lichtquellenanordnung nach beiden Seiten aus dem Sonnenblenden-Körper herausgeschwenkt werden kann.

2. Lichtquelle (30) für eine Fahrzeug-Sonnenblende (10) mit einer Lichtquellenanordnung (40), gekennzeichnet durch eine Einrichtung (50), mit welcher die Lichtquellenanordnung schwenkbar an einem Sonnenblenden-Körper (11) befestigt ist, um um eine erste Achse zwischen einer Speicher-Stellung innerhalb einer Ausnehmung (20) in der Sonnenblende in eine Benutzungsstellung, die aus dem Sonnenblenden-Körper herausgeschwenkt ist, verschwenkbar zu sein, und eine Kupplung zwischen der Lichtquellenanordnung (40) und der Einrichtung (50) zum schwenkbaren Befestigen der Lichtquellenanordnung, um die Bewegung der Lichtquellenanordnung um eine zweite Achse (C) zu ermöglichen, die im wesentlichen senkrecht zur ersten Achse steht.

3. Lichtquelle nach Anspruch 2, wobei die Kupplung eine Schwenkverbindung zwischen der Lichtquellenanordnung und der Einrichtung zum schwenkbaren Befestigen der Lichtquellenanordnung am Sonnenblenden-Körper aufweist.

4. Lichtquelle nach einem der vorhergehenden Ansprüche, wobei die Lichtquellenanordnung ein Licht-Gehäuse (25) aufweist mit einer Linse (35), die an einem Ende montiert ist, und eine Lampe (43), die im Gehäuse angeordnet ist, um Lichtstrahlen durch die Linse zu strahlen.

5. Lichtquelle nach Anspruch 4, wobei das Lichtquellengehäuse relativ flach ausgebildet ist und einen gerundeten Endabschnitt (37, 38) aufweist, der vom genannten Ende entfernt ist, sowie Seitenwände (26, 29), die unter Abstand am entfernten Ende enden, um End-Anschläge (47, 48) zu bilden.

6. Lichtquelle nach Anspruch 5, wobei die Kupplung ein relativ flaches Gehäuse (52, 54) mit gekrümmten Schlitzen (57, 58) aufweist, welche sich darin erstrecken und in Endwänden (56) enden, welche mit den End-Anschlägen (47, 48) des Lichtgehäuses (25) in Eingriff stehen.

7. Lichtquelle nach Anspruch 6, wobei die Schwenk-Verbindung einen Schwenk-Stift (49) aufweist, der im Licht-Gehäuse montiert ist, sowie einen Stift-Aufnahmeabschnitt (21), der am Gehäuse (52, 54) befestigt ist und konzentrisch in bezug auf die gekrümmten Schlitze ausgeformt ist.

8. Lichtquelle nach Anspruch 7, mit einem Schwenkarm (64), der sich vom Gehäuse (52, 54) in einer im wesentlichen senkrecht zur Achse der Aufnahme (21) stehenden Richtung erstreckt und nahe einem Ende angeordnet ist, daß vom Licht-Gehäuse entfernt ist.

## Revendications

1. Dispositif d'éclairage (30) pour paresoleil (10) de véhicule comprenant un ensemble d'éclairage (40), caractérisé par des moyens (50) pour le montage pivotant de l'ensemble d'éclairage sur le corps (11) du pare-soleil, pour permettre de la déplacer autour d'un premier axe (B) entre une position escamotée dans un évidement (20) du pare-soleil et une position d'utilisation dans laquelle il a pivoté à l'extérieur du corps du paresoleil, l'évidement (20) traversant le corps (11) du paresoleil pour permettre de faire pivoter l'ensemble d'éclairage vers l'extérieur d'un côté ou l'autre du corps du pare-soleil.

2. Dispotitif d'éclairage (30) pour un pare-soleil (10) de véhicule comprenant un ensemble d'éclairage (40) caractérisé par des moyens (50) pour le montage pivotant de l'ensemble d'éclairage à pivot sur le corps (11) du pare-soleil pour permettre de la déplacer autour d'un premier axe entre une position escamotée à l'intérieur d'un évidement (20) du pare-soleil et une position d'utilisation dans laquelle il a pivoté à l'extérieur du corps du pare-soleil, et une monture reliant l'ensemble d'éclairage (40) aux moyens (50) de montage pivotant de l'ensemble d'éclairage pour permettre de déplacer l'ensemble d'éclairage autour d'un deuxième axe (C) à peu près orthogonal au premier axe.

3. Dispositif d'éclairage selon la revendication 2, dans lequel la monture comprend une liaison à pivot reliant l'ensemble d'éclairage aux moyens de montage pivotant de l'ensemble d'éclairage sur le corps du pare-soleil.

4. Dispositif d'éclairage selon l'une quelconque des revendications précédentes, dans lequel l'ensemble d'éclairage comprend un boîtier de lampe (25) possédant une lentille (35) montée dans une extrémité et une lampe (43) positionnée dans le boîtier pour émettre de la lumière à travers la lentille.

5. Dispositif d'éclairage selon la revendication 4, dans lequel le boîtier de lampe est relativement plat et présente une extrémité arrondie (37, 38) à l'opposé de la première extrémité et des parois latérales (26, 29) qui se terminent en des positions espacées à l'extrémité opposée pour définir des butées d'extrémité (47, 48).

6. Dispositif d'éclairage selon la revendication 5, dans lequel la monture comprend un boîtier relativement plat (52, 54) dans lequel s'étendent des fentes curvilignes (57, 58) qui se terminent en des parois d'extrémité (56) qui sont en contact avec les butées d'extrémité (47, 48) du boîtier de lampe (25).

7. Dispositif d'éclairage selon la revendication 6, dans lequel l'articulation comprend un axe de pivotement (49) monté dans le boîtier de lampe et une bague (21) recevant l'axe, montée sur le boîtier (52, 54), et concentrique aux fentes curvilignes.

8. Dispositif d'éclairage selon la revendication 7, comprenant un arbre de pivotement (64) qui s'étend à partir du boîtier (52, 54) dans une direction essentiellement orthogonale à l'axe de la bague et à proximité d'une extrémité éloignée du boîtier de lampe.

FIG. I

FIG. 2